(19) Europäisches Patentamt
European Patent Office
Office européen des brevets

(11) **EP 2 267 642 B1**

(12) **FASCICULE DE BREVET EUROPEEN**

(45) Date de publication et mention
de la délivrance du brevet:
**31.12.2014 Bulletin 2015/01**

(51) Int Cl.:
***G06K 7/10*** (2006.01)

(21) Numéro de dépôt: **10160753.9**

(22) Date de dépôt: **22.04.2010**

(54) **Evaluation inductive du facteur de couplage d'un transpondeur électromagnétique**

Induktive Einschätzung des Kopplungsfaktors eines elektromagnetischen Transponders

Inductive assessment of the coupling coefficient of an electromagnetic transponder

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **19.06.2009 FR 0954147**

(43) Date de publication de la demande:
**29.12.2010 Bulletin 2010/52**

(73) Titulaire: **STMicroelectronics (Rousset) SAS
13790 Rousset (FR)**

(72) Inventeur: **Wuidart, Luc
83910 Pourrières (FR)**

(74) Mandataire: **de Beaumont, Michel
Cabinet Beaumont
1, rue Champollion
38000 Grenoble (FR)**

(56) Documents cités:
**EP-A1- 1 043 677        EP-A1- 1 071 038
US-A1- 2008 204 206**

**Description**

Domaine de l'invention

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

Exposé de l'art antérieur

Les systèmes de communication basés sur une modulation d'un champ électromagnétique généré par un terminal sont multiples. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

La qualité de la communication et de l'éventuel transfert d'énergie dépend du couplage entre le terminal et le transpondeur. Ce couplage, qui est inversement proportionnel (non linéaire) à la distance entre le terminal et le transpondeur, conditionne l'amplitude de la tension récupérée par le transpondeur. Il existe donc un besoin de pouvoir évaluer le facteur de couplage courant entre un transpondeur et un terminal dans le champ duquel il se trouve.

Le document US-A-2008/0204206 décrit un système de transmission à transpondeur dans lequel le transpondeur comporte un dispositif de mesure temporelle configuré pour déterminer une durée caractéristique d'un état chargé d'un accumulateur d'énergie.

Résumé

Il serait souhaitable de pouvoir évaluer le facteur de couplage entre un transpondeur et un terminal.

Il serait également souhaitable de pouvoir évaluer l'évolution de ce facteur de couplage lors d'une communication.

Il serait également souhaitable de pouvoir évaluer le facteur de couplage sans qu'il soit nécessaire d'effectuer un échange de données entre le terminal et le transpondeur.

Il serait également souhaitable de pouvoir effectuer cette évaluation côté transpondeur.

Il serait également souhaitable de proposer une solution indépendante du type de terminal dans le champ duquel se trouve le transpondeur.

Pour atteindre tout ou partie de ces objets ainsi que d'autres, il est prévu un procédé d'évaluation du facteur de couplage courant entre un transpondeur électromagnétique et un terminal, dans lequel un rapport entre des informations, représentatives d'une tension aux bornes d'un circuit oscillant du transpondeur et obtenues pour deux couples de valeurs inductives et capacitives de ce circuit oscillant, est comparé à un ou plusieurs seuils, les deux couples de valeurs préservant un accord du circuit oscillant à une même fréquence.

Selon un mode de réalisation de la présente invention :

une première information, relative au niveau d'une tension continue fournie par un redresseur aux bornes du circuit oscillant, est mesurée et mémorisée pour un premier couple de valeurs inductive et capacitive du circuit oscillant ; et une seconde information, relative au niveau de ladite tension continue, est mesurée et mémorisée pour un second couple de valeurs inductive et capacitive du circuit oscillant.

Selon un mode de réalisation de la présente invention, l'évaluation fournit une position du facteur de couplage courant par rapport à une position de couplage optimum avec un des deux couples de valeurs.

Selon un mode de réalisation de la présente invention, lesdits seuils sont fonction des valeurs inductives des couples de valeurs respectifs.

Selon un mode de réalisation de la présente invention, l'évaluation du facteur de couplage s'effectue par rapport à une position de couplage optimum avec le premier couple de valeurs.

On prévoit également un procédé de protection d'un transpondeur électromagnétique contre une éventuelle surchauffe à partir d'une évaluation du couplage, dans lequel un désaccord du circuit oscillant est provoqué si le rapport entre le couplage courant et le couplage optimum est compris entre deux seuils.

On prévoit également un transpondeur électromagnétique comportant :

un circuit oscillant en amont d'un circuit de redressement propre à fournir une tension continue lorsque le transpondeur se trouve dans le champ magnétique d'un terminal ; et

au moins un élément inductif commutable et au moins un élément capacitif commutable propres à être fonctionnellement connectés en parallèle sur le circuit oscillant.

Selon un mode de réalisation de la présente invention, lesdits éléments inductif et capacitif commutables sont connectés aux bornes de sortie du circuit de redressement.

Selon un mode de réalisation de la présente invention :

des premiers éléments inductif et capacitif commutables sont connectés entre une première borne du circuit oscillant et la masse ;

des seconds éléments inductif et capacitif commutables sont connectés entre une seconde borne du circuit oscillant et la masse.

Selon un mode de réalisation de la présente invention, les éléments inductifs sont réalisés par des circuits actifs.

Selon un mode de réalisation de la présente invention, le transpondeur comporte en outre une unité de traitement programmée pour mettre en oeuvre le procédé d'évaluation ou de protection.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;

la figure 2 est un schéma bloc simplifié d'un terminal et d'un transpondeur d'un système de communication à transpondeur électromagnétique ;

la figure 3 illustre un exemple d'allure de la tension aux bornes du circuit oscillant du transpondeur en fonction du facteur de couplage ;

la figure 4 est un schéma bloc fonctionnel illustrant un mode de mise en oeuvre du procédé d'évaluation du facteur de couplage ;

la figure 5 est un schéma bloc d'un mode de réalisation d'un transpondeur adapté à évaluer son facteur de couplage avec un terminal ;

la figure 6 est un schéma bloc d'un autre mode de réalisation d'un transpondeur adapté à évaluer son facteur de couplage ;

la figure 7 est un schéma bloc plus détaillé d'un mode de réalisation d'un transpondeur du type représenté en figure 5 ;

la figure 8 est une vue partielle d'un mode de réalisation plus détaillé d'un transpondeur du type de celui de la figure 5 ; et

la figure 9 est un schéma électrique simplifié et partielle d'un transpondeur du type de celui représenté en figure 5.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les fonctions susceptibles d'être mises en oeuvre par un terminal ou par un transpondeur, autres que la détermination du facteur de couplage par ce transpondeur n'ont pas non plus été détaillées, l'invention étant, là encore, compatible avec toute fonction usuelle d'un terminal ou d'un transpondeur.

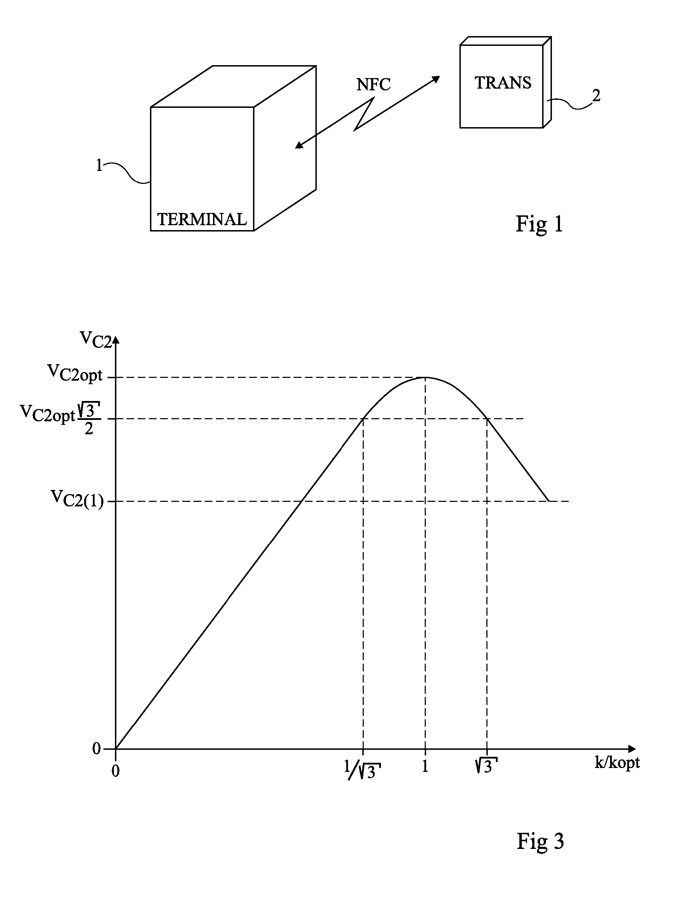

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur (TRANS).

Le terminal peut prendre différentes formes, par exemple, une borne de validation de titres de transport, un lecteur de passeports électroniques, un ordinateur portable, un dispositif mobile de communication (téléphone GSM, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone GSM, PDA, etc.), une étiquette électronique, etc.

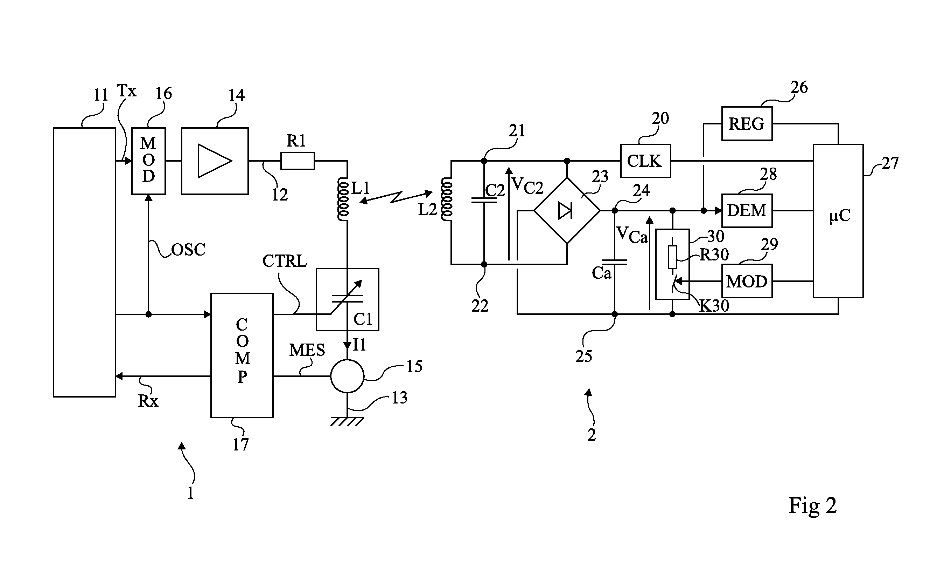

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHZ) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment courte devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}}, \qquad\qquad \text{(formule 1)}$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}}, \qquad\qquad \text{(formule 2)}$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On parle de charge ou consommation apportée par les circuits du transpondeur. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt} = 1$), puis décroît jusqu'à une valeur intermédiaire VC2(1) atteinte au couplage k = 1.

Comme l'illustre la figure 3, la tension $V_{C2}$ passe par deux points d'inflexion pour des valeurs de couplage correspondant à des rapports $k/k_{opt} = 1/\sqrt{3}$ et $k/k_{opt} = \sqrt{3}$, pour lesquels la tension $V_{C2}$ prend la valeur

$$V_{C2opt} \cdot \frac{\sqrt{3}}{2}.$$

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} \, , \qquad \text{(formule 3)}$$

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} \, , \qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left( \frac{L2}{R2.C2} \right)^2 \, , \qquad \text{(formule 5)}$$

où X2 représente la partie imaginaire de l'impédance du circuit oscillant ( $X2 = \omega \cdot L2 - \frac{1}{\omega \cdot C2}$ ) .

Par ailleurs, le courant I1 dans le circuit oscillant du terminal est donné par la relation :

$$I1 = \frac{Vg}{Z1_{app}} \, , \qquad \text{(formule 6)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, sont compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la formé :

$$Z1_{app} = R1_{app} = R1 + \frac{k^2 \cdot \omega^2 \cdot L1 \cdot L2^2}{Z2^2 \cdot R2 \cdot C2} \, . \qquad \text{(formule 7)}$$

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2} \, . \qquad \text{(formule 8)}$$

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{V_g}{\frac{R1}{R2} + k^2 \cdot \frac{L1}{L2}} \cdot \qquad \text{(formule 9)}$$

En position de couplage optimum $k_{opt}$, la tension maximale $V_{C2opt}$ est donc donnée par la formule (en combinant les formules 2 et 9) :

$$V_{C2opt} = \frac{V_g}{2} \cdot \sqrt{\frac{R2}{R1}} \cdot \qquad \text{(formule 10)}$$

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$.

En combinant les formules 9 et 10 et en exprimant le couplage de façon normalisée par le couplage optimum $(k/k_{opt})$, on obtient l'expression suivante de la tension $V_{C2}$ :

$$V_{C2} = 2 \cdot V_{C2opt} \cdot \frac{\dfrac{k}{k_{opt}}}{1 + \left(\dfrac{k}{k_{opt}}\right)^2} \cdot \qquad \text{(formule 11)}$$

Pour une valeur de couplage k donnée, en considérant que l'impédance du circuit oscillant du terminal ne varie pas et que les circuits restent accordés, le rapport entre les coefficients courants k et les coefficients optimum $k_{opt]L20}$ et $k_{opt]L21}$, respectivement pour une inductance L2 de valeur L20 et de valeur L21 donne, d'après la formule 2, l'expression suivante :

$$\frac{\dfrac{k}{k_{opt]L20}}}{\dfrac{k}{k_{opt]L21}}} = \sqrt{\frac{L21}{L20}} \cdot \qquad \text{(formule 12)}$$

Toujours pour une valeur de couplage k donnée et en considérant que l'impédance du circuit oscillant du terminal ne varie pas et que les circuits restent accordés, le rapport entre les valeurs $V_{C2]L21}$ et $V_{C2]L20}$ de la tension $V_{C2}$, respectivement pour les valeurs L21 et L20 de l'inductance L2, donne la relation suivante :

$$\frac{V_{C2]L21}}{V_{C2]L20}} = \frac{\left(\dfrac{k}{k_{opt]L20}}\right)^2 + 1}{\left(\dfrac{k}{k_{opt]L20}}\right)^2 + \dfrac{L21}{L20}} \cdot \sqrt{\frac{L21}{L20}} \cdot \qquad \text{(formule 13)}$$

On prévoit d'évaluer la position du couplage k par rapport à sa valeur optimale $k_{opt]L20}$ avec une première valeur d'inductance L20.

En effet, pour une position de couplage $k_{opt]L20}$ correspondant au couplage optimum avec l'inductance L20, la formule 13 permet d'écrire, avec la tension $V_{C2]L20}$ alors égale à $VC2_{opt]L20}$ :

$$\frac{V_{C2]L21}}{V_{C2opt]L20}} = \frac{2}{\sqrt{\frac{L20}{L21}} + \sqrt{\frac{L21}{L20}}} \quad . \qquad (\text{formule 14})$$

On prévoit d'exploiter cette relation pour déterminer, à partir d'un rapport "r" entre les tensions $V_{C2]L21}$ et $V_{C2]L20}$ avec des valeur L21 et L20 d'inductance qui sont connues (en préservant l'accord du circuit oscillant par une variation correspondante de l'élément capacitif C2), la position du transpondeur par rapport au couplage optimum $k_{opt]L20}$.

Si $\dfrac{V_{C2]L21}}{V_{C2]L20}} > \dfrac{2}{\sqrt{\frac{L20}{L21}} + \sqrt{\frac{L21}{L20}}}$ (formule 15), alors, le couplage courant est inférieur au couplage optimum.

A l'inverse si $\dfrac{V_{C2]L21}}{V_{C2]L20}} < \dfrac{2}{\sqrt{\frac{L20}{L21}} + \sqrt{\frac{L21}{L20}}}$ (formule 16), le couplage courant est supérieur au couplage optimum. Si les deux valeurs sont égales, cela signifie que l'on est au point de couplage optimum.

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

L'estimation de la position du couplage courant k par rapport à sa valeur optimale peut être affinée en estimant la position par rapport aux points d'inflexion de la courbe de la figure 3. En effet, pour des positions de couplage où le rapport $k/k_{opt} = 1/\sqrt{3}$ et $k/k_{opt} = \sqrt{3}$, la formule 13 permet d'écrire :

$$r = \frac{4}{\sqrt{\frac{L20}{L21}} + 3 \cdot \sqrt{\frac{L21}{L20}}} \quad , \quad \text{et} \qquad (\text{formule 17})$$

$$r = \frac{4}{3 \cdot \sqrt{\frac{L20}{L21}} + \sqrt{\frac{L21}{L20}}} \quad . \qquad (\text{formule 18})$$

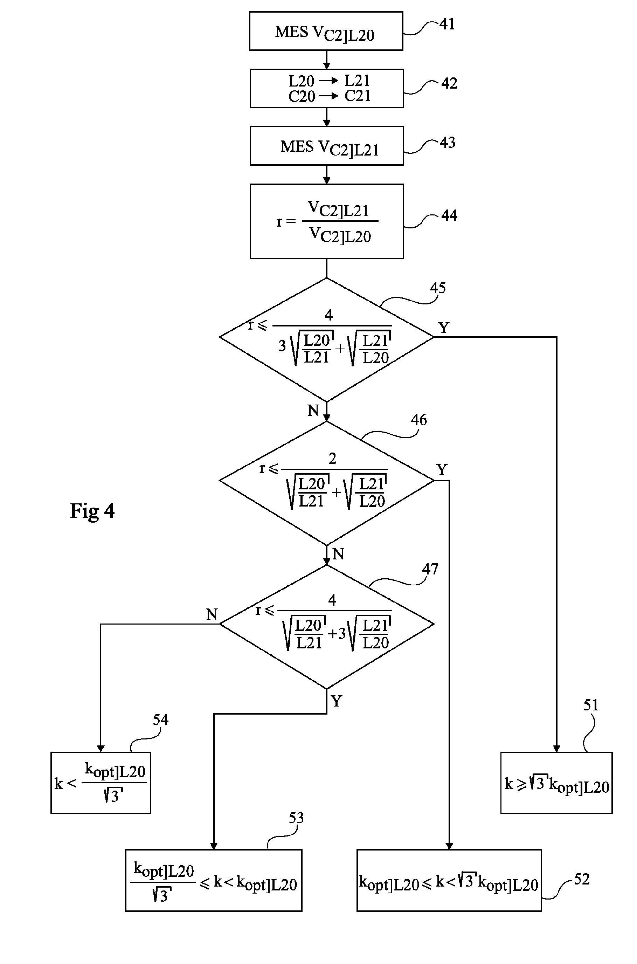

La figure 4 illustre la mise en oeuvre d'un tel mode de réalisation. Pour simplifier l'exposé de la figure 4, on continue à se référer aux valeurs $V_{C2]L20}$ et $V_{C2]L21}$, sachant qu'il est en pratique plus facile de mesurer les valeurs $V_{Ca]L20}$ et $V_{Ca]L21}$ de la tension $V_{Ca}$ mais que cela ne change rien sur les seuils de comparaison du rapport r.

On commence (bloc 41, MES $V_{C2]L20}$) par mesurer et mémoriser la tension aux bornes du condensateur C2 avec une première valeur d'inductance (L20). Puis (bloc 42, L20->L21, C20->C21), on modifie la valeur de l'élément inductif vers une valeur inférieure. En variante, cette modification s'effectue vers une valeur supérieure mais il est en pratique plus facile de diminuer la valeur d'une inductance en connectant une autre inductance en parallèle que de l'augmenter.

Pour préserver l'accord des circuits oscillants, on modifie de façon correspondante la valeur du condensateur C2. Par exemple, pour une division de la valeur de l'inductance par 2 en connectant une inductance de même valeur que l'inductance L20 en parallèle sur celle-ci, il faut multiplier par deux la valeur de capacité C2, de sorte que le rapport des éléments capacitifs soit égal à 0,5.

Puis (bloc 43, $V_{C2]L21}$), on mesure la tension $V_{C2}$ avec la valeur d'inductance L21 que l'on mémorise.

On calcule et on mémorise alors (bloc 44, $r = \dfrac{V_{C2]L21}}{V_{C2]L20}}$ ) le rapport r entre les tensions mesurées pour le comparer aux différents seuils permettant de déterminer la position du couplage par rapport au couplage optimum et aux points caractéristiques où $k/k_{opt} = 1/\sqrt{3}$ et $k/k_{opt} = \sqrt{3}$. En variante, le rapport r est calculé pour chaque comparaison ultérieure.

Par exemple, on commence par comparer (bloc 45, $r \leq \dfrac{4}{3 \cdot \sqrt{\dfrac{L20}{L21}} + \sqrt{\dfrac{L21}{L20}}}$ ) le rapport r par rapport à un seuil correspondant au point $k/k_{opt]L20} = \sqrt{3}$. Si r est inférieur ou égal à ce seuil (sortie Y du bloc 45), le circuit de traitement 27 fournit l'information (bloc 51, $k \geq \sqrt{3} \cdot k_{opt]L20}$ ) que le couplage courant est supérieur ou égal au couplage optimum $k_{opt]L20}$, multiplié par $\sqrt{3}$.

Si r est supérieur au premier seuil (sortie N du bloc 45), on teste (bloc 46, $r \leq \dfrac{2}{\sqrt{\dfrac{L20}{L21}} + \sqrt{\dfrac{L21}{L20}}}$ ) s'il est inférieur ou égal à un deuxième seuil correspondant au couplage optimum $k_{opt]L20}$. Dans l'affirmative (sortie Y du bloc 46), le couplage courant est compris entre le couplage optimum et son produit par $\sqrt{3}$ (bloc 52, $k_{opt]L20} \leq k < \sqrt{3} \cdot k_{opt]L20}$ ).

Dans la négative (sortie N du bloc 46), on teste (bloc 47, $r \leq \dfrac{4}{\sqrt{\dfrac{L20}{L21}} + 3 \cdot \sqrt{\dfrac{L21}{L20}}}$ ) si r est inférieur ou égal à un troisième seuil correspondant au point $k/k_{opt]L20} = 1/\sqrt{3}$. Dans l'affirmative (sortie Y du bloc 47), le couplage courant est compris entre le couplage optimum et le quotient du couplage optimum par $\sqrt{3}$ (bloc 53, $\dfrac{k_{opt]L20}}{\sqrt{3}} \leq k < k_{opt]L20}$ ). Dans la négative (sortie N du bloc 47), le couplage courant est inférieur au couplage optimum divisé par $\sqrt{3}$ (bloc 54, $k < \dfrac{k_{opt]L20}}{\sqrt{3}}$ ).

Les étapes 45 à 47 peuvent être effectuées dans un ordre différent. De plus, les inégalités strictes (< ou >) et les inégalités larges ($\leq$ et $\geq$) peuvent être inversées.

Une fois les mesures effectuées avec le couple de valeurs (L21, C21), on revient au couple de valeurs (L20, C20) considéré comme nominal. Ce retour aux valeurs nominales intervient, de préférence, dès la mesure effectuée (avant l'étape 44). On peut cependant prévoir qu'il intervienne plus tard dans le procédé, par exemple en fin d'évaluation.

Il est donc possible, par deux mesures de tension avec deux valeurs d'inductance du circuit oscillant du transpondeur, de lui faire déterminer le couplage courant avec le terminal par rapport à un couplage optimum.

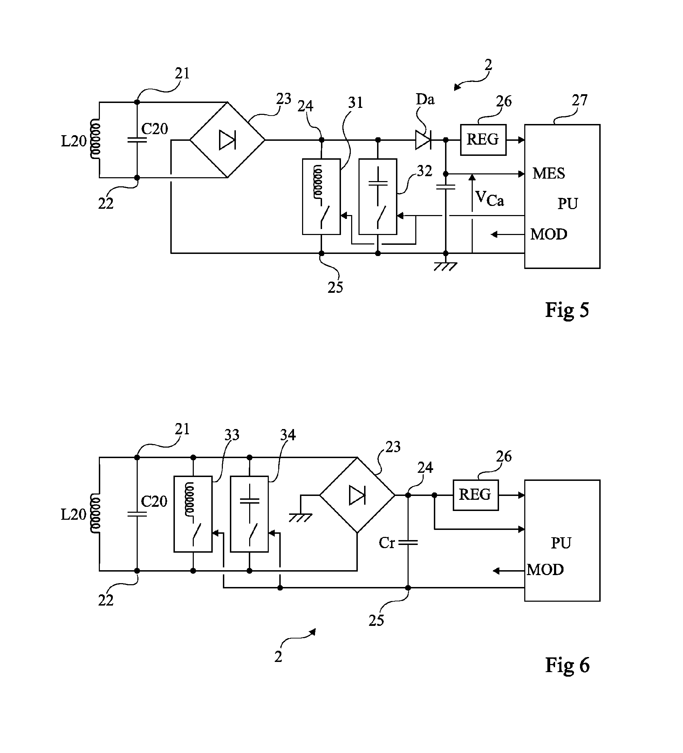

La figure 5 est un schéma-blocs d'un mode de réalisation d'un transpondeur 2, équipé pour déterminer automatiquement, lorsqu'il est dans le champ d'un terminal (non représenté), le couplage courant par rapport au couplage optimum. La représentation de la figure 5 est simplifiée par rapport à celle de la figure 2. En particulier, les éléments de démodulation, de rétromodulation et d'obtention de la fréquence d'horloge n'ont pas été illustrés.

Comme précédemment, le transpondeur 2 est basé sur un circuit oscillant parallèle. Dans l'exemple de la figure 5, on suppose qu'en amont du pont de diodes 23 par rapport au système de traitement 27 sont présents un élément inductif L20 et un élément capacitif C20. Entre les bornes 24 et 25 de sortie redressée du pont redresseur 23, sont prévus un élément inductif commutable 31 et un élément capacitif commutable 32 en parallèle. Ces éléments 31 et 32 sont destinés à être commutés pour mettre en oeuvre le procédé de détermination de la position de couplage, mais il ne s'agit pas de moyen de rétromodulation. Pour éviter une influence du condensateur Ca, celui-ci est placé en aval des blocs 31 et 32, et une diode Da est intercalée sur la ligne positive entre ces blocs et la connexion du condensateur Ca. En variante, la diode pourra être placée sur la ligne de référence sous réserve d'accepter une chute de tension entre la référence des blocs 31 et 32 et celles des autres circuits côté unité 27. L'unité de traitement 27 (PU) reçoit une information sur la tension $V_{Ca}$ sur une entrée MES pour mettre en oeuvre le procédé décrit ci-dessus. Les valeurs données aux éléments 31 et 32 sont telles que, lorsqu'ils sont fonctionnellement introduits dans le circuit oscillant, le transpondeur se comporte comme si son circuit oscillant présentait une inductance de valeur L21 en parallèle avec un condensateur de valeur C21.

La figure 6 est un schéma-blocs d'un autre mode de réalisation d'un transpondeur. Par rapport au mode de réalisation de la figure 5, les éléments commutables inductif 33 et capacitif 34 sont connectés en amont du pont 23, c'est-à-dire directement en parallèle sur les éléments L20 et C20. Par exemple, on pourra utiliser une antenne commutable.

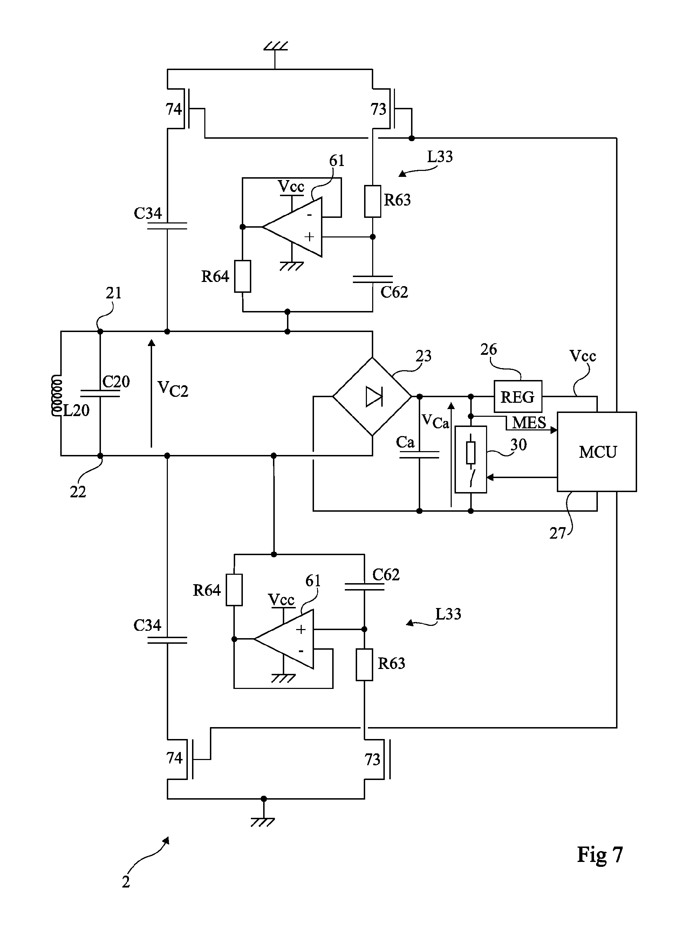

La figure 7 représente un exemple de schéma plus détaillé d'un transpondeur 2 équipé pour évaluer le facteur de couplage lorsqu'il est dans le champ d'un terminal. Ce mode de réalisation correspond à la figure 6, c'est-à-dire avec les éléments inductifs et capacitifs commutables en amont du pont redresseur 23. Pour faciliter la commande à partir de l'unité de traitement (MCU) 27, un élément capacitif C34 et un élément inductif L33 sont prévus entre chaque borne 21 et 22 du circuit oscillant et la masse. Chaque élément capacitif C34 est en série avec un interrupteur 74 et chaque élément inductif L33 est en série avec un interrupteur 73. Les interrupteurs 73 et 74 (par exemple, des transistors MOS) sont commandés par l'unité centrale 27. En figure 7, un étage de rétromodulation 30 (par exemple résistif) a été illustré.

De préférence, chaque élément inductif L33 est réalisé par un circuit actif (gyrateur), plus facilement intégrable qu'un enroulement inductif. Un tel circuit comporte un amplificateur opérationnel 61 dont l'entrée non inverseuse est reliée au point milieu d'une association en série d'un élément capacitif C62 et d'un élément résistif R63 entre la borne 21 (respectivement 22) et l'interrupteur 73. L'entrée inverseuse de l'amplificateur 61 est rebouclée sur sa sortie et est reliée à la borne 21, respectivement 22, par une résistance R64. Le fonctionnement d'un gyrateur est connu. Cela revient à connecter, entre la borne 21 et la masse, un élément inductif L33 ayant approximativement pour valeur le produit des résistances R63 et R64 et du condensateur C62 (L33 = R63.R64.C62), et pour résistance série une résistance de valeur R64.

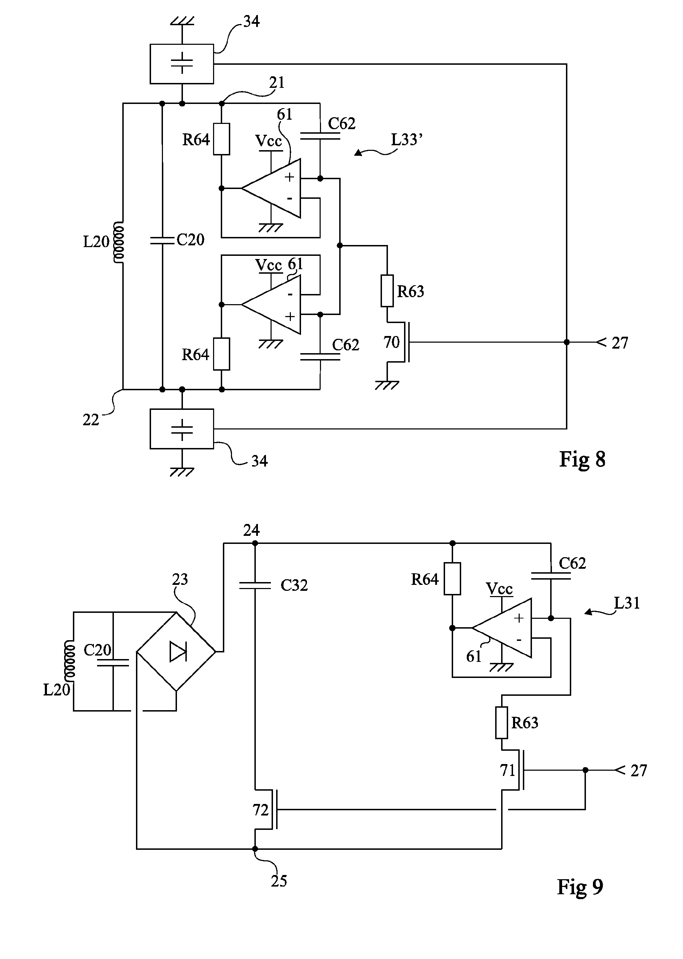

La figure 8 représente partiellement et schématiquement un autre exemple de réalisation dans lequel un gyrateur L33' est connecté en parallèle sur le circuit oscillant. Pour respecter le besoin de connexion à la masse d'un gyrateur et permettre sa commande, le gyrateur 23' comporte deux amplificateurs 61 respectivement connectés aux bornes 21 et 22 et leurs entrées non inverseuses respectives partagent une même résistance R63 et un même interrupteur 70. Pour simplifier, les éléments capacitifs commutables 34 n'ont pas été détaillés en figure 8.

La figure 9 est une vue partielle schématique d'encore un autre mode de réalisation correspondant à la connexion de la figure 5, c'est-à-dire avec les éléments inductif et capacitif commutables en aval du pont de redressement 23. Dans ce cas, un seul élément capacitif commutable C32 et un seul élément inductif commutable L31 suffisent. Dans l'exemple de la figure 9, l'élément capacitif C32 est en série avec un interrupteur 72 entre les bornes 24 et 25. L'élément inductif commutable est réalisé par un gyrateur L31 entre la borne 24 et la borne 25. Ce gyrateur étant commutable au moyen d'un interrupteur 71. Les interrupteurs 71 et 72 reçoivent un même signal de commande provenant de l'unité de traitement 27 pour provoquer la commutation du circuit oscillant de la valeur L20 vers la valeur L21 (et de la valeur C20 vers la valeur C21).

On notera que diminuer la valeur de l'inductance L2 en mettant des inductances actives en parallèle revient à placer la résistance équivalente de l'inductance active en parallèle sur la résistance (R2) équivalente à la charge du transpondeur. Par conséquent, diminuer la valeur L2 au moyen de tels gyrateurs revient à diminuer la résistance équivalente du transpondeur, donc à augmenter sa consommation. De préférence, on prévoira donc une diminution dans la valeur de l'inductance qui soit compatible avec le fait de préserver une téléalimentation du transpondeur.

Les seuils exploités pour déterminer la position par rapport au couplage optimum ne dépendent que des valeurs L20 et L21 qui sont connues pour un transpondeur donné. Par conséquent, le transpondeur n'a pas nécessairement besoin de moyens de calcul évolués de type microprocesseur mais peut simplement mesurer les tensions, calculer le rapport et le comparer par rapport à des seuils analogiques générés, par exemple, par des ponts diviseurs résistifs. Selon un autre exemple, les seuils sont précalculés et stockés dans une mémoire non volatile du transpondeur.

La connaissance du coefficient de couplage courant par rapport au couplage optimum peut avoir plusieurs applications.

Par exemple, cette information peut servir à détecter un risque de surchauffe du transpondeur. En effet, lorsque le couplage est proche du couplage optimum, l'énergie récupérée par le transpondeur est maximale. On peut alors éviter une éventuelle surchauffe en provoquant un désaccord du circuit oscillant, par exemple en prévoyant un élément capacitif commutable pour désaccorder le circuit oscillant L2-C2. On prévoit de désaccorder le circuit oscillant si le rapport k/k$_{opt}$ est compris entre deux seuils autour de la position de couplage optimum. On peut choisir, par exemple, un désaccord quand le coefficient de couplage k est compris entre $\mathrm{k_{opt}}/\sqrt{3}$ et $\mathrm{k_{opt}} \cdot \sqrt{3}$ . Le cas échéant, on peut réutiliser l'élément capacitif ayant servi à l'évaluation du couplage. Par exemple, on pourra commuter uniquement les interrupteurs 72 (figure 9) et 74 (figure 7) ou les blocs 32 (figure 5) ou 34 (figure 6) en prévoyant des liaisons de commande séparées.

Selon un autre exemple d'application, la connaissance de la position du couplage par rapport au couplage optimum permet d'optimiser la gestion d'énergie dans la communication avec un terminal. On peut ainsi sélectionner les fonctions exécutées par l'unité de traitement du transpondeur en fonction de l'énergie disponible.

L'évaluation du couplage peut être effectuée périodiquement pendant une communication. La seule précaution est de ne pas évaluer le couplage pendant une rétromodulation du transpondeur. Une première évaluation est par exemple effectuée dès que l'énergie récupérée par le transpondeur est suffisante pour que le microprocesseur 27 fonctionne. Puis, on effectue des mesures périodiques pendant la communication.

Selon encore un autre exemple, la position du couplage courant par rapport au couplage optimum est transmise au terminal pour qu'il adapte la communication (les requêtes qu'il envoie au transpondeur) à l'énergie dont dispose le transpondeur et qui conditionne sa capacité de calcul.

On notera que la détermination du couplage s'effectue sans qu'il soit nécessaire d'établir une communication avec le terminal.

De plus, la valeur du couplage optimum varie d'un terminal à un autre. Evaluer le couplage courant par rapport au couplage optimum tel que décrit ci-dessus permet de s'affranchir des caractéristiques d'un terminal donné et rend l'évaluation indépendante du terminal. Ainsi, un transpondeur équipé des moyens d'évaluation du couplage de l'invention peut fonctionner avec tout terminal existant.

De plus, le choix des valeurs à donner aux éléments inductifs et capacitifs dépend de l'application.

## Revendications

1. Procédé d'évaluation du facteur de couplage courant (k) entre un transpondeur électromagnétique (2) et un terminal (1), dans lequel un rapport (r) entre des informations, représentatives d'une tension aux bornes d'un circuit oscillant (L2, C2) du transpondeur et obtenues pour deux couples de valeurs inductives (L20, L21) et capacitives (C20, C21) de ce circuit oscillant, est comparé à un ou plusieurs seuils, les deux couples de valeurs préservant un accord du circuit oscillant à une même fréquence.

2. Procédé selon la revendication 1, dans lequel :

   une première information, relative au niveau d'une tension continue ($V_{Ca}$) fournie par un redresseur (23) aux bornes du circuit oscillant (L2, C2), est mesurée et mémorisée pour un premier couple de valeurs inductive (L20) et capacitive (C20) du circuit oscillant ; et
   une seconde information, relative au niveau de ladite tension continue, est mesurée et mémorisée pour un second couple de valeurs inductive (L21) et capacitive (C21) du circuit oscillant.

3. Procédé selon la revendication 1 ou 2, dans lequel l'évaluation fournit une position du facteur de couplage courant (k) par rapport à une position de couplage optimum (k$_{opt}$) avec un des deux couples de valeurs.

4. Procédé selon l'une quelconque des revendications 1 à 3, dans lequel lesdits seuils sont fonction des valeurs inductives (L20, L21) des couples de valeurs respectifs.

5. Procédé selon l'une quelconque des revendications 1 à 4, dans lequel l'évaluation du facteur de couplage s'effectue par rapport à une position de couplage optimum (k$_{opt]R20}$) avec le premier couple de valeurs (L20, C20).

6. Procédé de protection d'un transpondeur électromagnétique contre une éventuelle surchauffe à partir d'une évaluation du couplage selon l'une quelconque des revendications 1 à 5, dans lequel un désaccord du circuit oscillant (L2-C2) est provoqué si le rapport (r) entre le couplage courant (k) et le couplage optimum (k$_{opt]R20}$) est compris entre deux seuils.

7. Transpondeur électromagnétique comportant :

un circuit oscillant (L2, C2) en amont d'un circuit de redressement (23) propre à fournir une tension continue ($V_{Ca}$) lorsque le transpondeur se trouve dans le champ magnétique d'un terminal (1) ; et

au moins un élément inductif commutable (31, 33) et au moins un élément capacitif commutable (32, 34) propres à être fonctionnellement connectés en parallèle sur le circuit oscillant, et au moin un moyen pour la mise en oeuvre du procédé selon l'une quelconque des revendications 1 à 6.

**8.** Transpondeur selon la revendication 7, dans lequel lesdits éléments inductif (31) et capacitif (32) commutables sont connectés aux bornes de sortie du circuit de redressement (23).

**9.** Transpondeur selon la revendication 7, dans lequel :

des premiers éléments inductif (33) et capacitif (34) commutables sont connectés entre une première borne (21) du circuit oscillant (L20, C20) et la masse ;
des seconds éléments inductif (33) et capacitif (34) commutables sont connectés entre une seconde borne (22) du circuit oscillant (L20, C20) et la masse.

**10.** Transpondeur selon l'une quelconque des revendications 7 à 9, dans lequel les éléments inductifs sont réalisés par des circuits actifs (L31, L33, L33').

**11.** Transpondeur selon l'une quelconque des revendications 7 à 10, comportant en outre une unité de traitement (27) programmée pour mettre en oeuvre le procédé conforme à l'une quelconque des revendications 1 à 6.

**Patentansprüche**

**1.** Ein Verfahren zum Auswerten des Stromkopplungsfaktors (k) zwischen einem elektromagnetischen Transponder (2) und einer Endeinrichtung (1), wobei ein Verhältnis (r) zwischen Daten, die maßgeblich sind für eine Spannung über einer Oszillatorschaltung (L2, C2) des Transponders und erlangt werden für zwei Paare von Induktivitäts- (L20, L21) und Kapazitätswerten (C20, C21) dieser Oszillatorschaltung, die mit einen oder mehreren Schwellenwerten verglichen werden, wobei die zwei Wertepaare eine Abstimmung der Oszillatorschaltung auf einer gleichen Frequenz bewahren bzw. aufrecht erhalten.

**2.** Verfahren nach Anspruch 1, wobei
erste Daten relativ zum Pegel einer Gleichspannung ($V_{ca}$), die durch einen Gleichrichter (23) über der Oszillatorschaltung (L2, C2) bereitgestellt wird, gemessen und für ein erstes Paar von Induktivitäts- (L20) und Kapazitätswerten (C20) der Oszillatorschaltung gespeichert werden; und
zweite Daten relativ zum Pegel der Gleichspannung gemessen und für ein zweites Paar von Induktivitäts- (L21) und Kapazitätswerten (C21) der Oszillatorschaltung gespeichert werden.

**3.** Verfahren nach Anspruch 1 oder 2, wobei die Auswertung eine Position des Stromkopplungsfaktors (k) in Bezug auf eine optimale Kopplungsposition ($k_{opt}$) mit einem der zwei Wertepaare vorsieht.

**4.** Verfahren nach einem der Ansprüche 1 bis 3, wobei die Schwellenwerte eine Funktion der Induktivitätswerte (L20, L21) der entsprechenden Wertepaare sind.

**5.** Verfahren nach einem der Ansprüche 1 bis 4, wobei der Kopplungsfaktor gegenüber einer optimalen Kopplungsposition ($k_{opt]R20}$) mit dem ersten Wertepaar (L20, C20) ausgewertet wird.

**6.** Ein Verfahren zum Schützen eines elektromagnetischen Transponders gegen mögliches Überhitzen basierend auf der Auswertung der Kopplung nach einem der Ansprüche 1 bis 5, wobei ein Verstimmen der Oszillatorschaltung (L2-C2) verursacht wird, wenn das Verhältnis (r) zwischen der Stromkopplung (k) und der optimalen Kopplungsposition ($k_{opt]R20}$) sich zwischen zwei Schwellenwerten liegt.

**7.** Ein elektromagnetischer Transponder, der Folgendes aufweist:

eine Oszillatorschaltung (L2, C2) vorgeschaltet einer Gleichrichtungsschaltung (23), die in der Lage ist, eine Gleichspannung ($V_{ca}$) vorzusehen, wenn sich der Transponder im Magnetfeld einer Endeinrichtung (1) befindet; und

mindestens ein schaltbares induktives Element (31, 33) und mindestens ein schaltbares kapazitives Element (32, 34), die in der Lage sind, funktionell parallel an die Oszillatorschaltung angeschlossen zu werden; und mindestens ein Mittel für die Umsetzung des Verfahrens nach einem der Ansprüche 1 bis 6.

**8.** Transponder nach Anspruch 7, wobei die schaltbaren induktiven (31) und kapazitiven Elemente (32) an die Ausgangsanschlüsse der Gleichrichterschaltung (23) angeschlossen werden.

**9.** Transponder nach Anspruch 7, wobei:

erste schaltbare induktive (33) und kapazitive (34) Elemente zwischen einem ersten Anschluss (21) der Oszillatorschaltung (L20, C20) und der Masse angeschlossen werden;
zweite schaltbare induktive (33) und kapazitive (34) Elemente zwischen einem zweiten Anschluss (22) der Oszillatorschaltung (L20, C20) und der Masse angeschlossen werden.

**10.** Transponder nach einem der Ansprüche 7 bis 9, wobei die induktiven Elemente durch aktive Schaltungen (L31, L33, L33') gebildet werden.

**11.** Transponder nach einem der Ansprüche 7 bis 10, der ferner eine Prozessoreinheit (27) aufweist, die zum Umsetzen des Verfahrens nach einem der Ansprüche 1 bis 6 programmiert ist.

## Claims

**1.** A method for evaluating the current coupling factor (k) between an electromagnetic transponder (2) and a terminal (1), wherein a ratio (r) between data representative of a voltage across an oscillating circuit (L2, C2) of the transponder and obtained for two pairs of inductive (L20, L21) and capacitive (C20, C21) values of this oscillating circuit, is compared with one or several thresholds, the two pairs of values preserving a tuning of the oscillating circuit to a same frequency.

**2.** The method of claim 1, wherein:

first data relative to the level of a D.C. voltage ($V_{Ca}$) provided by a rectifier (23) across the oscillating circuit (L2, C2) are measured and stored for a first pair of inductive (L20) and capacitive (C20) values of the oscillating circuit; and
second data relative to the level of said D.C. voltage are measured and stored for a second pair of inductive (L21) and capacitive (C21) values of the oscillating circuit.

**3.** The method of claim 1 or 2, wherein the evaluation provides a position of the current coupling factor (k) with respect to an optimum coupling position ($k_{opt}$) with one of the two pairs of values.

**4.** The method of any of claims 1 to 3, wherein said thresholds are a function of the inductive values (L20, L21) of the respective pairs of values.

**5.** The method of any of claims 1 to 4, wherein the coupling factor is evaluated against an optimum coupling position ($k_{opt]R20}$) with the first pair of values (L20, C20).

**6.** A method for protecting an electromagnetic transponder against a possible overheating based on the evaluation of the coupling of any of claims 1 to 5, wherein a detuning of the oscillating circuit (L2-C2) is caused if the ratio (r) between the current coupling (k) and the optimum coupling ($k_{opt]R20}$) ranges between two thresholds.

**7.** An electromagnetic transponder comprising:

an oscillating circuit (L2, C2) upstream of a rectifying circuit (23) capable of providing a D.C. voltage ($V_{Ca}$) when the transponder is in the magnetic field of a terminal (1); and
at least one switchable inductive element (31, 33) and at least one switchable capacitive element (32, 34) capable of being functionally connected in parallel on the oscillating circuit; and
at least one means for the implementation of the method of any of claims 1 to 6.

8. The transponder of claim 7, wherein said switchable inductive (31) and capacitive (32) elements are connected to the output terminals of the rectifying circuit (23).

9. The transponder of claim 7, wherein:

   first switchable inductive (33) and capacitive (34) elements are connected between a first terminal (21) of the oscillating circuit (L20, C20) and the ground;
   second switchable inductive (33) and capacitive (34) elements are connected between a second terminal (22) of the oscillating circuit (L20, C20) and the ground.

10. The transponder of any of claims 7 to 9, wherein the inductive elements are formed by active circuits (L31, L33, L33').

11. The transponder of any of claims 7 to 10, further comprising a processing unit (27) programmed to implement the method of any of claims 1 to 6.

Fig 1

Fig 3

Fig 2

Fig 4

Fig 5

Fig 6

Fig 7

Fig 8

Fig 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080204206 A
- EP 0857981 A